Europäisches Patentamt

European Patent Office

Office européen des brevets

(19)

(11) Publication number: **0 009 282**

**B1**

# EUROPEAN PATENT SPECIFICATION

(12)

(45) Date of publication of patent specification: **04.11.81**

(51) Int. Cl.³: **A 01 J 5/12**

(21) Application number: **79200504.3**

(22) Date of filing: **13.09.79**

(54) Pulsator device for use in milking machines.

(30) Priority: **20.09.78 IT 4689178**

(43) Date of publication of application:
**02.04.80 Bulletin 80/7**

(45) Publication of the grant of the European patent:
**04.11.81 Bulletin 81/44**

(84) Designated Contracting States:
**AT BE CH DE FR LU NL**

(56) References cited:
**CH - A - 551 738**
**FR - A - 2 201 828**
**GB - A - 891 890**
**GB - A - 1 432 092**
**US - A - 2 655 168**

(73) Proprietor: INTERPULS S.n.C. di Ligabue & C.
Via Maria Melato, 4
I-42020 Montecavolo (Reggio Emilia) (IT)

(72) Inventor: Ligabue, Luigi
Via Maria Melato 4
I-42020 Montecavolo (Reggio Emilia) (IT)

(74) Representative: Lari, Ascanio
Studio Tecnico Brevetti Vicolo Trivelli, 6
I-42100 Reggio Emilia (IT)

Courier Press, Leamington Spa, England.

Pulsater device for use in milking machines

Machine milking, as is well known, has developed more and more and to such an extent at this time that is has entered into common use. The equipment for such milking operation has followed the same general principle for several decades. This essentially comprises effecting two actions on a nipple, namely, one of suction and one of compression reproducing, in substance, a suckling action on the animal which is being milked.

The milking machines require, among other things, a unit which was previously called a "switch" and which is nowadays known as a "pulsator", by means of which the nipples are subjected to particular pulsating action of compression and dilation by means of the vacuum created in a holder for nipples.

Long experience has shown that such pulsator is practically the heart of the installation given that it is essential for it not only to function at the speed required, but also for it to maintain a constant time function and for it to always exercise a substantially uniform action by which it completely evacuates the udder for the reason that if the extraction is not complete, the daily milk yield rapidly reduces. In practice it has been shown, however, that if the problem is able to be resolved on a theoretical basis; in reality it finishes, in a short or long period, by not meeting the effective requirements any more especially because of the conditions which are created in the surroundings in which the pulsator must work. The technique has had, therefore, to take account of negative factors and has hence sought to avoid any difficulties which in view of the industrialisation of agriculture have become increasingly more important thus imposing the requirement of discovery of suitable new solutions.

Pulsators in accordance with the prior art (FR-A-2.201.828; CH-A-511738; GB-A-1.432.092; GB-A-891.890) have drawbacks that will be set forth here below.

It has also been found, for example, that milking machines for bovine cattle, for instance cows, are not suitable for ovine animals, for instance sheep or goats.

In the first place, in order to avoid difficulties, pulsators have been studied which use the traditional principle of operation and with the hope of ensuring constant accuracy in operation but practice has shown that problems still exist even though there have been some notable improvements. In fact these units are based substantially on a system of "calibration" which, however, because of the construction, or for certain accuracy, becomes considerably modified in time thus resulting in the establishment of maintenance requiring special control and test equipment of everything, whilst does not, however, even allow the use of the pulsator for ovine animals. Besides it is seen that the operating mechanism of what can be defined as "slide valves" are based on mechanisms which also by their very conception result in causing exactly at least a part of the difficulties indicated.

In this particular regard a pulsator has been examined which has improved the situation considerably and is based on the principle of two slide valves, not by transmission of the movement or drive directly from one to the other, but with the operation indirectly independent and which ensures good constancy of the alternation of the cycle as well.

Even though these later pulsators have taken a notably progressive step — especially as regards the regularity and safety of the movement of the slide valves and hence of the general operation — long practice over the years has shown that external factors eventually result, even though after considerable time, in the same way by involving variation in the speed of the pulsators which provide the maintenance of a certain engagement. This type of pulsator, however, can not be used in the milking of ovine animals.

Finally, even if known pulsators have attained in a general sense a high degree of performance and reliability, there still exists the possibility of providing other solutions which would better respond to the operational requirements of today and to those of users who always require less sophisticated units involving easy maintenance and having a long life and which are also able to be used almost directly by ovine animals.

An object of the present invention is the provision of a pulsator which maintains its speed even under worse ambient conditions.

Another object of the invention is that of permitting external factors, causing variations in the speed of the pulsators, to bring this latter back to its normal value and without having to dismantle the pulsator itself.

Another object of the invention is the maintenance of a constant calibration for a long period.

A further object of the invention is that of permitting easy and immediate maintenance.

A still further object of the invention is that of permitting suitable normal cleaning of the pulsator, for example, daily washing without the pulsator having to be re-calibrated.

Finally, it is an object of the invention to provide for the possibility of using the same pulsator for milking bovine animals such as cows, and for milking ovine animals.

The objects are obtained by means of a pulsator device having two distribution slide valves driven in reciprocating fashion by a first and second pair of sealed, flexible or elastic diaphragms which are operated by vacuum. The said diaphragms are connected together in pairs by respective rods so as to be deformed simultaneously and in opposite directions while being subjected to a vacuum action produced from outside the pulsator device. In the pulsator the vacuum is made to act on the inner face of the first pair of diaphragms to move a first slide valve for applying the vacuum to two external connections and the vacuum is made to act on the outer face of the second pair of diaphragms to operate the second slide valve for causing the vacuum to act on the first pair of diaphragms. The air, or any other gaseous medium encapsulated in chambers formed between the outer face of each of the first pair of diaphragms and the corresponding distribution cover, moves in both directions through an outer connecting duct. Said duct extends symmetrically between the above indicated chambers. The mentioned conduit or duct may have a free aperture which is adjustable at at least one point, preferably an intermediate point, so as to restrict passage of the fluid to a lesser or greater extent. The flow adjusting unit is preferably operated and accessible from the outside.

The invention will be described further, by way of example, with reference to the accompanying drawings, in which:—

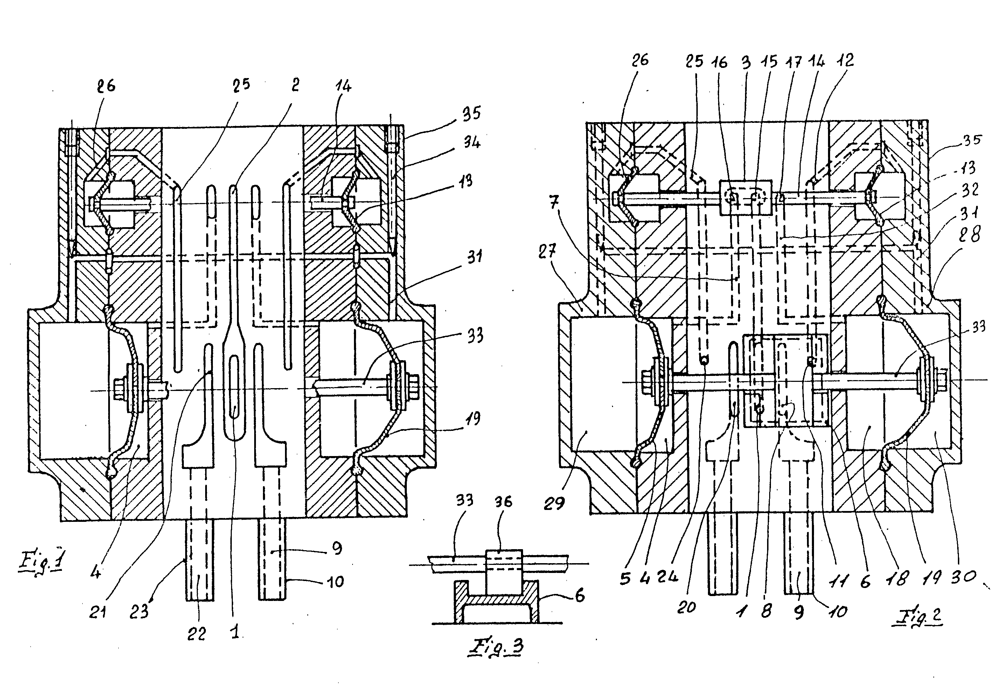

Fig. 1 is a plan view of a section through a pulsator device showing the mechanism and entrance and exit conduits but, for clarity, not showing slide valves;

Fig. 2 is also a plan view of a section through the device covered by a plate which limits the openings of said channels and moreover showing the slide valves; and

Fig. 3 is a schematic section showing the transmission for the drive to the slide valves.

The impulse or pulsator device according to the invention comprises a main body 35 in which a conduit or duct 2 communicates with a vacuum pump (not shown) and also communicates, via an orifice 1, with the internal cavity of a slide valve 6. Slide valve 6 is reciprocally slideable in a central passage of the body 35 alternately over openings or orifices 8 and 20 of ducts 9 and 22 leading to connections 10 and 23 respectively.

Slide valve 6 also alternately slides over orifices 11 and 24 of ducts 12 and 25 respectively. The slide valve 6 is connected on either side via rod 33 with diaphragms 5 and 19 so to have the same deformed simultaneously and in opposite directions when they are subjected to the action of a vacuum produced from outside, the diaphragms being displaceable respectively in chambers 4, 29 and 6, 30.

Ducts 2 also communicates via central opening 15 with slide valve 3 reciprocally and alternately slideable over orifices 16 and 17 of ducts 7 and 32 leading to chambers 4 and 18 located inwardly or each membrane 5 and 19. Slide valve 3 is connected for displacement by a shaft 14 to membranes 13 and 26 displaceable in chambers located either side of slide valve 3. Chambers 29 and 30 are interconnected via duct 31 which also has regulating pins or needles 34 located in body 35 and adjustable from outside of the body 35 by means of a screwdriver or the like.

In order to clarify understanding of the invention the operation of the apparatus will now be described.

Suction is applied by a vacuum pump (not shown) to orifice 1 via a conduit or duct 2 and is communicated through conduit 2 into the internal cavity of the slide valve 3 and causes the membrane 5 to assume the position in cavity or chamber 4 as illustrated.

The internal cavity of the second slide valve 6 engages over the orifice 1 and extends to the orifice 8 and communicates the operative suction action to channel 9 of the connector 10 on which tubing is connected and leads to the suction part (cup) concerned.

The orifice 11 becomes covered or engaged and, by way of the channel 2 the suction is applied to the external face of the membrane 13 connected to slide valve 3 by shaft 14 and causes the slide valve 3 to slide to the right hand side of the drawing. Upon moving the slide valve 3, whilst engaging the central opening 15 and leaving opening 16 uncovered, engages instead that of opening 17. Thus suction action applied to cavity 4 is transferred to cavity or chamber 18 via duct 32 and the membrane 19 is drawn inwardly again causing the slide valve 6 to slide in the other direction (to the left in the drawing) and to cover the orifice 11 and thereby prevent the suction action influencing the membrane 13. The slide valve 6 then engages the orifice 20 which flows into the duct 21 which goes to duct 22 of connection 23 on which the tubing is engaged and which leads to the other teat holders concerned (not shown).

The slide valve 6 then engages and communicates with the orifice 24 which, by way of the duct 25, transfers the suction action to front or outer side of the membrane 26 which is then drawn to the left by which the original position (as shown) is re-established and the cycle is repeated.

The membranes are mounted air-tight from the side on which the vacuum must act and whilst the said cavities are alternatively brought into contact with the atmosphere, cavities 29 and 30, closed by covers 27 and 28, remain instead sealed always from everything. The air in these chambers passes into the duct 31 which is also airtight — and passes alternatively from one chamber to the other.

It is therefore always the same air which circulates in the chambers and by this arrangement the possibility of other air entering from the outside is avoided and the possibility of impurities entering the chamber itself are avoided. In such case, the duct 31 can be also of large diameter since it is only a passage and it is therefore practically impossible to obstruct.

In Fig. 3 there is shown a slide 36 slideable by a shaft 33 and having a certain lateral play in respect of the slide valve 6 in order to soften the action of suction on the teats. The internal aperture of duct 31 is adjustable, so being altered in its section of air channel which will be obliged to slide, in one direction or the other, that it finds more or less resistant.

The air will pass, consequently, more or less quickly from one chamber to the other and in consequence the rate of the pulsations of the membranes 5 and 19 will be altered in accordance with the whole of the free passage and this means that if, for example, because of an increase in temperature of the external air, the rate of the pulsator will change in respect of the optimum, it is enough to widen said free duct 31. In the case of a drop in the temperature it is necessary to restrict the duct 31.

The throttling of duct 31 may be obtained, as shown in the drawings, by means of one or more pins 34, screwed on the body 35 and adjustable from the outside the pulsator device, and able to be operated, for example with the help of a simple screwdriver.

In order to obtain perfect equilibrium, the elastic membranes 5 and 19, and the chambers 29 and 30 may be equal and the duct 31 may be extended in a symmetrical manner from one chamber to the other.

For the milking of ovine animals, the rate, or pitch may be altered by regulating the whole of the free aperture of the duct 31.

## Claims

1. A pulsator device for milking installations comprising two distribution slide valves (6,3) driven in reciprocating fashion by first and second pairs of sealed, flexible or elastic diaphragms (5 and 19), (26 and 13) which are operated by vacuum, the said diaphragms being connected together in pairs by respective rods (33) (14) so as to be deformed simultaneously and in opposite directions when they are subjected to the action of a vacuum produced from outside the pulsator device, characterized in that the vacuum is made to act on the inner face of the first pair of diaphragms (5 and 19) to move a first slide valve (6) for applying the vacuum to two external connections (10,23) and the vacuum is made to act on the outer face of the second pair of diaphragms (26 and 13) to operate the second slide valve (3) for causing the vacuum to act on the first pair of diaphragms (5,19): and that air or any other gaseous medium encapsulated in chambers (29,30) formed between the outer face of each of the first pair of diaphragms (5 and 19) and a corresponding distribution cover (27 and 28) moves in both directions through an outer connecting duct (31), in which duct (31) there is provided at least one flow control valve (34) adjustable from outside the pulsator device.

2. A device according to claim 1, in which the outer connecting duct (31) extends symmetrically between the chambers (29,30).

3. A device as claimed in claim 1 or 2 in which the control valve (34) is situated on the central point of the outer connecting duct (31).

## Revendications

1. Dispositif de pulsateur pour installations à traire, comprenant deux vannes à tiroirs (6, 3), commandées de manière réciproque par une première et une seconde paire de diaphragmes (5 et 19), (26 et 13) scellés, flexibles ou élastiques qui sont actionnés par le vide, lesdits diaphragmes étant reliés entre eux par paires à l'aide de tiges (33) (14), pour être déformés simultanément et dans des directions opposées, alors qu'ils sont sujets à l'action du vide produit à l'extérieur du dispositif de pulsateur, caractérisé en ce que le vide est fait de façon à agir sur la face interne de la première paire de diaphragmes (5 et 19), afin de déplacer une première vanne à tiroir (6) pour appliquer le vide à deux connexions extérieures (10, 23), et le vide étant fait de façon à agir sur les faces externes de la seconde paire de diaphragmes (26 et 13) pour actionner la deuxième vanne à tiroir (3), afin de faire agir le vide sur la première paire de diaphragmes (5, 19), et en ce que l'air ou tout autre milieu gazeux, encapsulé dans des chambres (29, 30) formées entre la face externe de chacun des diaphragmes (5 et 19) de la première paire et un couvercle de distribution (27 et 28) correspondant se déplace dans les deux directions par un conduit (31) de connexion extérieur, dan lequel est prévue au moins une valve (34) de réglage du flux ajustable de l'extérieur du dispositif de pulsateur.

2. Un dispositif selon la revendication 1, dans lequel le conduit (31) de connexion extérieur se situe symétriquement entre les chambres (29, 30).

3. Un dispositif selon la revendication 1 ou 2, dans lequel la soupape de réglage (34) est située au point central du conduit (31) de connexion extérieur.

## Patentansprüche

1. Eine Pulsator-Vorrichtung für Melkinstallationen bestehend aus zwei Verteiler-Gleitventilen (6,3), die abwechslungsweise von einem ersten und zweiten Paar von geschlossenen, biegbaren oder elastischen, durch Vakuum bestätigten Diaphragmen (5 und 19), (26 und 13) gesteuert werden, wobei diese letzteren paarweise miteinander durch Stangen (33) (14) verbunden sind, so dass sie gleichzeitig und in entgegengesetzter Richtung verformt werden, indem sie der Wirkung eines ausserhalb des Pulsators erzeigten Vakuums unterworfen sind, gekennzeichnet dadurch, dass das Vakuum so geführt ist, dass es auf die Innenfläche des ersten Diaphragmenpaares (5 und 19) wirkt, um ein erstes Gleitventil (6) zu bewegen, so dass das Vakuum in zwei äussere Verbindungen (10,23) geführt wird und auf die Aussenfläche des zweiten Diaphragmenpaares (26 und 13) wirkt, um das zweite Gleitventil (3) zu bewegen, so dass veranlasst wird, dass das Vakuum auf das erste Diaphragmenpaar (5,19) wirkt, und wobei die Luft oder jedes andere gasförmige Medium, welches in den Kammern (29, 30) zwischen der Aussenwand eines jeden des ersten Diaphragmenpaares (5 und 19) und des dazugehörenden Verteilerdeckels (27 und 28) eingeschlossen ist, sich durch einen äusseren Verbindungskanal (31) in beide Richtungen bewegt, in welchem Verbindungskanal (31) mindestens ein von ausserhalb der Pulsator-Vorrichtung einstellbares Durchfluss - Regulierventil (34) angebracht ist.

2. Eine Vorrichtung nach Anspruch 1, in welcher der äussere Verbindungskanal (31) symmetrisch zwischen den Kammern (29,30) liegt.

3. Eine Vorrichtung nach Anspruch 1 oder 2, in welcher das Regulierventil (34) im Mittelpunkt des äusseren Verbindungskanales (31) angebracht ist.

Fig. 1

Fig. 2

Fig. 3